# EUROPÄISCHE PATENTANMELDUNG

(11) **EP 4 818 898 A1**
(43) Veröffentlichungstag der Anmeldung: **07.10.2026**
(21) Anmeldenummer: 25167435.4
(22) Anmeldetag: 31.03.2025
(51) Int. Cl.: G06F 9/48, G05B 19/418, G06N 3/08, G06N 5/04

(54) **VERFAHREN UND SYSTEM ZUM BETRIEB EINES TECHNISCHEN GERÄTS**

(71) Anmelder: Siemens Aktiengesellschaft, 80333 München (DE)
(72) Erfinder: Broukal, Oskar, 1150 Wien (AT); Fusco, Francesco, 1130 Wien (AT); Hartl, Michael, 2241 Schönkirchen-Reyersdorf (AT); Holzner, Peter, 1150 Wien (AT); Joksch, Martin, 3423 St.Andrä-Wördern (AT); Schall, Daniel, 2020 Hollabrunn (AT); Sündermann, Axel, 1220 Wien (AT)
(74) Vertreter: Siemens Patent Attorneys

(57) **Zusammenfassung**

Computer-implementiertes Verfahren zum Betrieb eines technischen Geräts (TD1) durch eine verbundene Steuervorrichtung (C1), wobei dessen Betrieb mithilfe von Datenpunkten beschrieben werden kann, und folgende Schritte ausgeführt werden:
a) Bereitstellen einer Steuerungsanfrage (AA, AAN) für das technische Gerät (TD1), und Festlegen der Steuerungsanfrage als Eingabe,
b) Bereitstellen einer Menge von Betriebsdaten (LDP) für die Datenpunkte,
c) Bereitstellen einer Menge von Beschreibungen (CD) für die Datenpunkte,
d) Optionales Bereitstellen einer Menge von Gruppierungs-Markierungen (T) für die Datenpunkte,
e) Erzeugen von Steuerungs-Einbettungen (E, NCD, NCD2) aus der Eingabe sowie einer Datenmenge, welche aus der Menge an Betriebsdaten (LDP) der Datenpunkte und/oder zu der Menge an Beschreibungen (CD) der Datenpunkte und/oder, optional, der Menge von Gruppierungs-Markierungen (T) für die Datenpunkte gebildet ist, mithilfe eines bereitgestellten Einbettungs-Modells in Form eines Encoders, und Berechnen einer jeweiligen Einbettungs-Ähnlichkeit einer jeweiligen Steuerungs-Einbettung (E, NCD, NCD2) zur Eingabe anhand der semantischen Ähnlichkeit,
f) Berechnen von Steuerdaten (NCD1, RES) durch Anwenden der Steuerungs-Einbettungen (E, NCD, NCD2) auf ein bereitgestelltes großes Sprachmodell, LLM,
g) Sortieren der jeweiligen Steuerdaten anhand der jeweiligen Einbettungs-Ähnlichkeit,
h) Ausführen der Steuerdaten aus den jeweiligen Steuerdaten (RES) mit der höchsten Einbettungs-Ähnlichkeit zum Betrieb eines technischen Geräts (TD1) durch die Steuervorrichtung (C1).

## Beschreibung

Die Erfindung betrifft ein computer-implementiertes Verfahren und ein System zum Betrieb eines technischen Geräts durch eine verbundene Steuervorrichtung, wobei dessen Betrieb mithilfe von Datenpunkten beschrieben werden kann.

Die Erfindung betrifft ferner ein Computer-Programm-Produkt.

In der Industrie ist der Zugriff auf Daten aus Fabriken, Fertigungsanlagen und industriellen Automatisierungssystemen der Schlüssel zur Erschließung des Potenzials für datengesteuerte Produktionsanalysen und -optimierungen.

Die sogenannte "OPC Unified Architecture", kurz OPC UA ist ein Standard für den Datenaustausch als plattformunabhängige, service-orientierte Architektur (kurz SOA), welche die Fähigkeit einführt, Maschinendaten, wie beispielsweise Regelgrößen, Messwerte, Parameter usw., nicht nur zu transportieren, sondern auch maschinenlesbar semantisch zu beschreiben.

OPC UA ist die neueste Generation aller Spezifikationen der "Open Platform Communications", kurz OPC, von der "OPC Foundation".

Die sogenannte "operational technology", kurz OT, beschreibt Hardware und Software, die physische Geräte, industrielle Anlagen, Prozesse und Ereignisse überwacht und steuert.

In einem OT-Netzwerk sind Sensoren und Aktoren an eine Steuerung angeschlossen und überwachen Umgebungsbedingungen, erkennen Objekte oder lösen nach vorgegebenen Bedingungen Aktionen aus, wodurch sich zum Beispiel Fertigungsumgebungen automatisieren oder Gebäude überwacht werden können.

In der Regel sind OT-Datenpunkte über eine heterogene Palette von OT-Verbindern zugänglich.

Darüber hinaus bestehen aber auch andere offene oder proprietäre Protokolle, insbesondere bei sogenannten "brownfield"-Geräten, welche schon seit längerer Zeit in Betrieb sind.

Sobald die erforderlichen Datenverbinder, sogenannte Konnektoren, welche einzelne Datenelemente miteinander verbinden, installiert und konfiguriert sind, können die erforderlichen Daten für die Datenmodellierung, Abfrage und Berechnung in eine IT-Infrastruktur gelesen/geschrieben werden, um den gewünschten Anwendungsfall für die Datenanalyse/-optimierung zu implementieren.

Die relevanten Datenpunkte zu identifizieren und diese Datenpunkte auf ein semantisch aussagekräftiges und standardisiertes Datenmodell abzubilden, ist jedoch herausfordernd und äußerst zeitaufwändig.

OT-Datenpunkte müssen auf der Grundlage einiger textbasierter Markierungen oder niedrigerer, Konnektor-spezifischer Adressinformationen durchsucht werden.

Die Markierungs-Benennung oder die Adressstruktur sind jedoch in den meisten Fällen nicht leicht zu interpretieren, und der Suchraum kann 10-100K Datenpunkte für jedes Gerät umfassen.

Selbst wenn internationale Standards, wie beispielsweise ISO, übernommen werden, oder zusätzliche Metainformationen über den Konnektor verfügbar und standardisiert sind, beispielsweise mithilfe von OPC UA "Companion"-Spezifikationen), kann die tatsächliche Feldimplementierung oft von den Standards abweichen und sogar über Linien oder sogar über Geräte in derselben Fertigung hinweg ein Konflikt entstehen, was beispielweise aufgrund von Implementierungen zu unterschiedlichen Zeiten oder von verschiedenen Lösungsanbietern auftreten kann.

Die Konfiguration der notwendigen Datenkonnektivität erfordert daher den Zugriff auf Informationen, die möglicherweise nur durch internes Stammeswissen oder externe Lösungsanbieter verfügbar sind und die im Laufe der Zeit leicht vergessen und verloren gehen können.

Dies führt zu langwierigen und teuren Implementierungsprojekten, die anwendungsfallspezifisch sind und nur schwer wiederverwendet oder verallgemeinert werden können.

Ein komplexer Ansatz zur Erfassung und Verarbeitung von OT-Daten aus der Fertigung umfasst in der Regel die folgenden Schritte:
1) Die Konnektoren zu den Feldgeräten müssen auf der Grundlage der unterstützten Protokolle ("brownfield", also Bestands-Geräte oder "greenfield", also Neu-Geräte) entwickelt oder konfiguriert werden,
2) Die Markierungen oder Adressen der erforderlichen Datenpunkte müssen identifiziert werden, was beispielsweise im Falle einer speicherprogrammierbaren Steuerung, kurz SPS, durchaus eine Anzahl von Datenpunkten in der Größenordnung von 10-100K umfassen kann,
3) Die Datenpunkte können dann in vor Ort oder Cloud-basierter IT-Technologie, wie zum Beispiel in relationale Datenbanken, gesammelt und gespeichert werden;
4) Auf den gesammelten Datenpunkten wird ein semantisch angereichertes Datenmodell definiert, um den Datenzugriff zu standardisieren.

Für die Umsetzung der skizzierten Schritte können mehrere kommerzielle Angebote verwendet werden, wie beispielsweise AWS, loT, Greengrass, Siemens Industrial Edge.

Die Konfiguration ist jedoch weitgehend ein manueller Aufwand und insbesondere Schritt 2), nämlich die Auswahl der Markierung beziehungsweise der Adresse der benötigten Datenpunkte, ist nicht skalierbar.

Automatische Methoden, die auf der strikten Interpretation verfügbarer Standards oder interner Namenskonventionen basieren, die für die Definition der Tag-Namen übernommen wurden, sind manchmal möglich, aber auch nicht leicht skalierbar.

Die Übernahme solcher Standards oder Konventionen ist in der Regel nicht in der gesamten Fertigung einheitlich.

Ansätze in der Datenwissenschaft, welche auf semantischer Suche basieren, wie beispielsweise. klassische Empfehlungssysteme oder - in jüngerer Zeit - generative KI können im Allgemeinen das Rüstzeug liefern, um Aspekte des Problems anzugehen.

Im Stand der Technik ist dieser Schritt weitgehend manuell und erfordert komplexe Integrationsprojekte, was sich auf die Skalierbarkeit neuartiger Angebote, wie beispielsweise bei Siemens Industrial Edge, nachteilig auswirkt.

Es ist daher Aufgabe der Erfindung eine skalierbare Lösung für das spezifische Problem der automatischen Zuordnung von industriellen Datenpunktadressen zu semantischen Datenmodellen in industriellen Umgebungen bereitzustellen, insbesondere für den Betrieb von technischen Geräten.

Die erfindungsgemäße Aufgabe wird durch ein computer-implementiertes Verfahren zum Betrieb eines technischen Geräts durch eine verbundene Steuervorrichtung gelöst, wobei dessen Betrieb mithilfe von Datenpunkten beschrieben werden kann, und folgende Schritte ausgeführt werden:
a) Bereitstellen einer Steuerungsanfrage für das technische Gerät, und Festlegen der Steuerungsanfrage als Eingabe,
b) Bereitstellen einer Menge von Betriebsdaten für die Datenpunkte,
c) Bereitstellen einer Menge von Beschreibungen für die Datenpunkte,
d) Optionales Bereitstellen einer Menge von Gruppierungs-Markierungen für die Datenpunkte,
e) Erzeugen von Steuerungs-Einbettungen aus der Eingabe sowie einer Datenmenge, welche aus der Menge an Betriebsdaten der Datenpunkte und/oder zu der Menge an Beschreibungen der Datenpunkte und/oder, optional, der Menge von Gruppierungs-Markierungen für die Datenpunkte gebildet ist, mithilfe eines bereitgestellten Einbettungs-Modells in Form eines Encoders, und Berechnen einer jeweiligen Einbettungs-Ähnlichkeit einer jeweiligen Steuerungs-Einbettung zur Eingabe anhand der semantischen Ähnlichkeit,
f) Berechnen von Steuerdaten durch Anwenden der Steuerungs-Einbettungen auf ein bereitgestelltes großes Sprachmodell, LLM,
g) Sortieren der jeweiligen Steuerdaten anhand der jeweiligen Einbettungs-Ähnlichkeit,
h) Ausführen der Steuerdaten aus den jeweiligen Steuerdaten mit der höchsten Einbettungs-Ähnlichkeit zum Betrieb eines technischen Geräts durch die Steuervorrichtung.

Dadurch wird ein automatisiertes System zum Durchsuchen großer Mengen von OT-Markierungen, wie beispielsweise von Eingangs-/ Ausgangs-Tabellen von Speicherprogrammierbaren Steuerungen (SPS-E/A-Tabellen), erreicht, wobei die größten Übereinstimmungen für ein gewünschtes semantisch beschriebenes Konzept, wie zum Beispiel eine Asset-Beschreibung und Variablen-Freitextbeschreibungen, identifiziert werden können.

Gruppierungs-Markierungen oder kurz Markierungen für Datenpunkte können Zuordnungen zu vorbestimmten Gruppen sein, beispielsweise durch Klassifizierung, um Arten beziehungsweise Typen von Datenpunkten, wie nach physikalischen Kenngrößen getrennt, oder nach Art der Erfassung eines Datenpunkts, sowie ferner Arten von Kontext-Dokumenten, wie Spezifikations-Daten, Betriebsdaten, voneinander semantisch zu trennen und zu entsprechenden vorbestimmten Gruppen zuzuweisen.

Die Menge von Gruppierungs-Markierungen für die Datenpunkte enthält mehrere Gruppen beziehungsweise Klassen von Markierungen, welche einzelnen Datenpunkten zugeordnet werden können.

Markierungen sollen die Unterscheidbarkeit von Datenpunkten erleichtern, um die Zuordnung eines Datenpunkts beziehungsweise dessen Adresse zu dem jeweiligen technischen Gerät zu erleichtern.

Die Art der Erfassung eines Datenpunkts kann neben einem jeweiligen Messprinzip oder einer statischen oder dynamischen Eigenschaft auch die Relevanz des Datenpunkts auf einen zugeordneten Betriebsmodus umfassen.

Mit anderen Worten können Datenpunkte, beziehungsweise deren Adressen, jeweiligen technischen Geräten auf einfache Weise automatisiert zugeordnet werden, wodurch der Betrieb des technischen Geräts vereinfacht und effizienter wird.

Über die Datenpunkt-Adressen kann auf die jeweiligen Datenpunkte zugegriffen werden, beispielsweise um Steuerinformationen, gegebenenfalls auch Geräte-Parameter, dem technischen Gerät mitzuteilen und dieses dadurch zu steuern, oder Sensorinformationen vom technischen Gerät auszulesen.

Die Steuerungsanfrage für das technische Gerät kann den Namen und optional einen Steuerungs- oder Betriebsparameter des technischen Geräts umfassen.

Durch die Steuerungsanfrage für das technische Gerät wird durch Anwendung des Einbettungs-Modells nach relevanten, ähnlichen Datenpunkten gesucht, und mithilfe des LLM die relevantesten Steuerdaten bezüglich der Steuerungsanfrage für das technische Gerät bereitgestellt, wodurch die gewünschte Automatisierung der Zuordnung zwischen einem Asset, Attributen und relevanten Datenpunkten, beziehungsweise deren Adressen, ermöglicht wird.

Somit umfassen die erzeugten Steuerungseinbettungen einen Bezug zu den relevanten Datenpunkten des technischen Geräts, das heißt zur entsprechenden Steuerungsanfrage.

Die Automatisierung wird erreicht, indem Kontext-Informationen genutzt werden, um die korrekte Zuordnung zu ermöglichen.

Durch Anwendung des Einbettungs-Modells und eines LLMs kann auf einfache Weise ermittelt werden, welche Datenpunkte für den Betrieb des technischen Geräts relevant sind, und welche jeweiligen Adressen zugeordnet werden können.

Das technische Gerät ist durch Steuerbefehle steuerbar oder kann Sensordaten liefern, unter Verwendung der jeweilig ermittelten Adresse der entsprechenden Datenpunkts, und weist daher eine technische Funktion auf und kann beispielsweise eine Pumpe, eine Bearbeitungsmaschine wie eine CNC-Fräsmaschine, eine Produktionsanlage wie eine Spritzgussmaschine, eine elektronische Steuerung wie ein Wechselrichter für einen elektrischen Antrieb oder eine Klimaanlage sein.

Eine Steuervorrichtung ist dazu eingerichtet, mithilfe der Steuerbefehle das verbundene technische Gerät zu steuern oder zu betreiben, wobei dies auf analoge oder digitale Weise erfolgen kann.

Der Betrieb des technischen Geräts kann beispielsweise durch ein Profil für einen oder mehrere Betriebsparameter für einen zulässigen oder auch unzulässigen Betrieb beschreiben werden, welcher beispielsweise eine Betriebsspannung, eine Betriebstemperatur, eine Bearbeitungsgeschwindigkeit, eine Leistungsaufnahme, eine Drehmomentabgabe an einer angetriebenen Welle, die Emissionen wie Abwärme oder Vibrationen, oder dergleichen sein.

Unter den Betrieb kann beispielsweise auch die Planung von Wartungsintervallen, die Planung von Betriebszeiten, die Überwachung von Leistungsgrenzen oder von erforderlichen Betriebsmitteln fallen.

Der Betrieb des technischen Geräts kann mithilfe von Datenpunkten beschrieben werden, da beispielsweise der aktuelle Zustand des Geräts erfasst werden können und daraus Steuerinstruktionen abgeleitet werden können, um einen effizienten Betrieb zu erreichen.

Auf die Datenpunkte kann über zugeordnete Adressen lesend oder schreibend zugegriffen werden.

Die technische Funktion beinhaltet beispielsweise die Funktion oder Anwendung eines Motors als Pumpe, als Antrieb für ein Förderband, einer Klimaanlage oder einer CNC-Fräsmaschine.

Ein Datenpunkt kann ein Betriebsparameter für einen jeweiligen Betriebsmodus des technischen Geräts sein, beispielsweise Sensordaten oder Steuerungsdaten.

Das Steuergerät kann dazu eingerichtet sein, aus Steuerdaten gerätespezifische Steuerinstruktionen, beispielsweise in einer entsprechenden Programmiersprache bereitzustellen und auszuführen.

Eine Steuerungsanfrage an ein technisches Gerät dient zur Steuerung oder zum Betrieb des technischen Geräts und umfasst eine Kennzeichnung des technischen Geräts und ein oder mehrere Attribute hierfür.

Durch das erfindungsgemäße Verfahren wird somit erreicht, dass die relevanten Datenpunkte aus der Datenbank abgerufen werden und zum Betrieb des technischen Geräts herangezogen werden.

In einer Weiterbildung der Erfindung ist es vorgesehen, dass die Schritte e) bis g) wiederholt ausgeführt werden, und bei einem Durchlauf der Schritte e) bis g) zumindest einer Menge aus den in den Schritten b) bis d) bereitgestellten Mengen ausgewählt sind, welche die Datenmenge bilden, und die Eingabe aus der im Schritt g) erhaltenen jeweiligen Steuerdaten mit der höchsten Einbettungs-Ähnlichkeit festgelegt ist.

Dadurch kann das gewünschte Ergebnis eines einzelnen Durchlaufs weiter verbessert werden, indem inkrementell weitere Merkmale aus ergänzenden Mengen berücksichtigt werden.

Durch die Durchführung von Wiederholungen der Verfahrensschritte kann die Systemkomplexität geringgehalten werden, wodurch die Effizienz der Lösung verbessert werden kann.

In einer Weiterbildung der Erfindung ist es vorgesehen, dass die Schritte e) bis g) zunächst mit der Menge an Betriebsdaten der Datenpunkte und/oder zu der Menge an Beschreibungen der Datenpunkte die Datenmenge bilden, und in einer nachfolgenden Wiederholung die Schritte e) bis g) mit der Menge von Gruppierungs-Markierungen für die Datenpunkte die Datenmenge bildet.

Dadurch kann zusätzlich eine Klassifizierungs-Information, welche über die bereitgestellte Gruppendefinitionen oder entsprechende Markierungen genützt und verwendet werden, um die gewünschten Steuerdaten hinsichtlich ihrer Ähnlichkeitswerte noch besser bestimmen zu können, und die Zuordnung von Datenpunkten des relevanten technischen Geräts weiter zu verbessern.

In einer Weiterbildung der Erfindung ist es vorgesehen, dass die semantische Ähnlichkeit mithilfe der Cosinus-Ähnlichkeit zwischen zwei Steuerungs-Einbettungen bestimmt wird.

Dadurch kann auf einfache Weise die Ähnlichkeit hinsichtlich der Steuerungsanfrage und der Zuordnung zu dem technischen Gerät bestimmt werden.

In einer Weiterbildung der Erfindung ist es vorgesehen, dass die semantische Ähnlichkeit als gewichtete Summe von Cosinus-Ähnlichkeiten zwischen einer Steuerungs-Einbettung und einer lexikalischen Ähnlichkeit von Beschreibungs-Texten bestimmt wird.

Dadurch kann auf einfache Weise die Ähnlichkeit hinsichtlich der Steuerungsanfrage und der Zuordnung zu dem technischen Gerät bestimmt werden.

In einer Weiterbildung der Erfindung ist es vorgesehen, dass der im Schritt e) angewandte Encoder der Encoder eines bereitgestellten Auto-Encoders ist.

Dadurch kann auf einfache Weise ein Encoder erzeugt und bereitgestellt werden, welcher mit relevanten Trainingsdaten aus historischen Steuerungsanfragen trainiert wurde, und daher besonders gut auf die vorliegende Anwendung abgestimmt ist.

In einer Weiterbildung der Erfindung ist es vorgesehen, dass der Betrieb des technischen Geräts durch die Steuervorrichtung mithilfe von Steuerinstruktionen erfolgt, welche aus den Steuerdaten abgeleitet werden.

Dadurch wird erreicht, dass das technische Gerät effizient mithilfe der Steuerungsanfrage betrieben wird.

Die erfindungsgemäße Aufgabe wird auch durch ein System zum Betrieb eines technischen Geräts durch eine umfasste, verbundene Steuervorrichtung gelöst, wobei das erfindungsgemäße Verfahren nach einem der vorhergehenden Ansprüche ausgeführt wird.

In einer Weiterbildung der Erfindung ist es vorgesehen, dass das System ein Klienten-Server-System mit einem Server und zumindest einem verbundenen Klienten ist, welcher jeweils mit einem technischen Gerät verbunden ist, und die Steuervorrichtung von einem jeweiligen Klienten umfasst ist.

Die Rechenvorrichtungen des Servers und der Klienten umfassen jeweils einen Prozessor mit einem Speicher.

Die erfindungsgemäße Aufgabe wird auch durch ein Computer-Programm-Produkt gelöst, umfassend Befehle, die bei der Ausführung des Programms durch das erfindungsgemäße Klienten-Server-System dieses veranlassen, das erfindungsgemäße Verfahren/die Schritte des erfindungsgemäßen Verfahrens auszuführen.

Im Nachfolgenden sind Ausführungsbeispiele der Erfindung anhand von Figuren näher beschrieben. In den Figuren zeigt
- Fig. 1: ein Ausführungsbeispiel der Erfindung anhand eines Block-Diagramms,
- Fig. 2: ein weiteres Ausführungsbeispiel der Erfindung basierend auf einer "Retrieval Augmented Generation",
- Fig. 3: ein Ausführungsbeispiel der Erfindung in Form eines Ablaufdiagramms,
- Fig. 4: ein Ausführungsbeispiel der Erfindung in Form eines Systems.

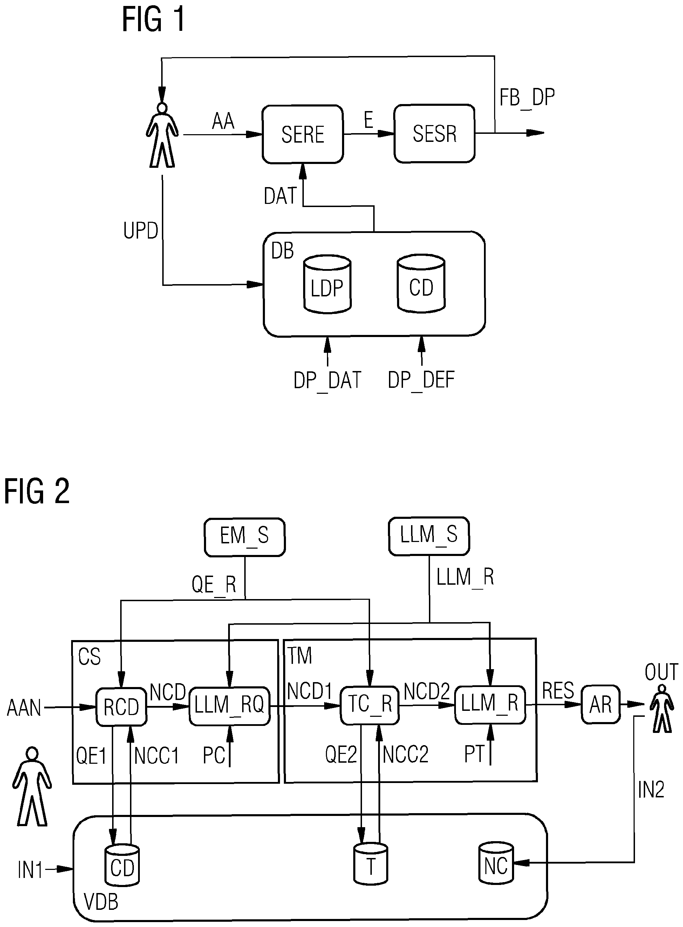

**Fig. 1** zeigt ein Ausführungsbeispiel der Erfindung anhand eines Block-Diagramms.

Eine Datenbank DB speichert eine Liste von vorhandenen Datenpunkten LDP, beziehungsweise deren Adressen, welche typischerweise als I/O-Tabellendumps aus den SPS-Programmen in Form von bereitgestellten Datenpunkt-Daten DP_DAT verfügbar ist, oder auch durch Exportieren von Browse-Informationen aus einem Konnektor wie OPC UA.

Alternativ oder zusätzlich können Kontextdaten CD in unstrukturierter Form, wie beispielsweise Text- oder Bilddumps relevanter ISO-Normen, OPC UA-Spezifikationen, Kommentare aus den SPS-Programmen oder bekannte benutzerdefinierte Konventionen und Regeln), welche in Form von Daten DP_DEF bereitgestellt und herangezogen werden, welche dann semantisch interpretiert und mit der Benutzerabfrage, wie für ein gewünschtes Asset Modell, verbunden werden.

Der Benutzer sendet eine Abfrage AA mit einem semantisch beschriebenen Kontext, wie beispielsweise ein Name oder eine Beschreibung von Assets und Attributen, wie ein technisches Gerät und deren Betriebsparameter.

Mithilfe eines semantischen Einbettungs- und Retrieval-Modells auf Basis künstlicher Intelligenz, welches durch ein entsprechendes Modell-Modul SERE bereitgestellt und verarbeitet wird, kann die Benutzerabfrage verwendet werden, um nach relevanten Datenpunkten, beziehungsweise deren Adressen, und Kontextdaten in der Datenbank DB zu suchen.

Dieser Schritt wird durchgeführt, um die Dimensionalität des Problems zu reduzieren, bei dem nur Markierungen (engl. "tags") und Kontextregeln, wie Konventionen oder Standards, gefiltert werden, die für die jeweilige Abfrage gelten und sogenannte Einbettungen E zu erzeugen, wie für die Assets, die Attribute, die Datenpunkte und die Kontextdaten.

Anschließend bewertet und ordnet ein statistisches Bewertungs-Modul SESR die relevanten Datenpunkte auf der Grundlage aller gegebenen Eingaben.

Die Bewertung wird durchgeführt, beispielsweise indem eine Punktzahl ermittelt wird.

Die Punktzahl kann berechnet werden, indem zuerst die semantische Ähnlichkeitsmetrik für einen Datenpunkt gelesen wird, wie vom Modell-Modul SERE für semantischen Einbettungs- und Retrieval-Modell im vorherigen Schritt berechnet wurde, beispielsweise anhand der Cosinus-Ähnlichkeit.

Die Ähnlichkeitsmetrik, die Datenpunkte und die relevanten Kontextdaten werden an ein generatives Kl-Modell, das auf einem großen Sprachmodell LLM basiert, gesendet, um eine Rangfolge der Datenpunkte vorherzusagen.

Schließlich wird dem Benutzer die beste Übereinstimmung, oder auch eine Liste der besten Übereinstimmungen, als Datenpunkte mit der höchsten Rangfolge präsentiert, einschließlich eines statistischen Vertrauensmaßes und der Kontextdaten, die bei der Entscheidung verwendet wurden.

Dies kann berechnet werden, indem Logits, welche im vorherigen Schritt mit der Vorhersage des generativen Kl-Modells verknüpft sind, in Wahrscheinlichkeiten umgewandelt werden.

Ein Logit ist in der Statistik der natürliche Logarithmus einer Chance, das heißt der Wahrscheinlichkeit p geteilt durch die Gegenwahrscheinlichkeit 1-p.

Unter der Logit-Transformation versteht man die Transformation von Wahrscheinlichkeiten in Logits, welche in der logistischen Regression zur Spezifikation der Kopplungsfunktion verwendet wird.

Das Maß an Übereinstimmung wird ermittelt, indem wie so berechneten Wahrscheinlichkeitswerte miteinander verglichen werden.

Der Benutzer kann das System weiter anreichern und steuern, indem er die bereitgestellte Ausgabe bestätigt, welche in neue Kontextinformationen in der Datenbank übersetzt wird, oder sogar zusätzlichen Kontext oder Regeln bereitstellt und dementsprechend die Datenbank DB in einem Schritt UPD aktualisiert.

Dieses Benutzerfeedback FB_DP aktualisiert dann die Datenbank und das Semantik- und Abrufmodul.

Eine weitere mögliche Ausführungsform der vorgeschlagenen Erfindung, die auf einer "Retrieval Augmented Generation" (kurz RAG)-Modellstruktur basiert, ist in Fig. 2 dargestellt.

Zunächst erfolgt eine Kontext-Suche CS.

Die Liste der Datenpunkte LDP und Kontextdaten CD wird als Kombination aus Text und verschiedenen Einbettungsformen in einer Vektordatenbank VDB auf einem entsprechenden Datenbank-Server gespeichert, welche vorab als Eingabe IN1 bereitgestellt sind.

Eine Vektordatenbank ist eine typische Datenbankstruktur, die es ermöglicht, Daten aus der Datenbasis basierend auf semantischer Ähnlichkeit, wie beispielsweise der Cosinus-Ähnlichkeit zwischen einbettenden Vektoren, schnell zu durchsuchen.

Die semantische Ähnlichkeit wird von der Vektordatenbank berechnet, beispielsweise anhand eines Cosinus-Abstands zwischen den Einbettungs-Vektoren der Kontextdaten und dem Einbettungs-Vektor der Benutzeranfrage.

In einem ersten Retrieval-Schritt werden als erste Daten NCD, basierend auf der Standard-Vektorsuche, nur Kontextdaten extrahiert, die semantisch der Benutzerabfrage ähnlich sind.

Dazu wird beispielsweise mithilfe eines Encoders eine Verallgemeinerung der Anfrage erstellt durch einen Vorgang, nämlich einen Empfang von Kontext-Dokumenten durch ein entsprechendes Empfangs-Modul RCD, engl. "retrieval of context documents", welcher die ersten Daten NCD in Form von Asset-Name, Attribut-Name und k Kontext-Dokumente liefert.

Der Encoder kann beispielsweise durch den Encoder eines Auto-Encoders gebildet sein und mit entsprechenden Testdaten für gültige und/oder ungültige Datensätze trainiert werden.

Dies erfolgt, indem eine erste Abfrage Einbettung QE1, engl. "query embedding", an die Vektordatenbank VDB durchgeführt wird, welche die Anzahl k an nächstliegenden Kontext-Dokumente, engl. "k nearest context documents", als erstes Ergebnis NCC1 liefert.

Das "nahe aneinander liegen" von Dokumenten kann anhand einer berechneten Ähnlichkeitsfunktion zwischen den Dokumenten ermittelt werden.

Die Cosinus-Ähnlichkeit misst beispielsweise den Winkel zwischen zwei Vektoren, wobei je kleiner der Winkel in einer Heuristik ist, umso ähnlicher sind die Konzepte oder Dokumente.

Die Cosinus-Ähnlichkeit ist somit ein Maß für die Ähnlichkeit zweier Vektoren, wobei der Cosinus des Winkels zwischen beiden Vektoren bestimmt wird.

Der Cosinus des eingeschlossenen Nullwinkels ist eins, und für jeden anderen Winkel ist der Kosinus des eingeschlossenen Winkels kleiner als eins.

Er ist daher ein Maß dafür, wie ausgeprägt zwei Vektoren in die gleiche Richtung zeigen.

Typische Anwendungen für die Cosinus-Ähnlichkeit finden sich im Vergleich von Dokumenten, von Multimedia-Objekten, im Textmining, im Data-Mining, im Auffinden von Plagiaten, bei Suchmaschinen oder in der Kryptographie bei der Entschlüsselung chiffrierter Texte.

Einbettungen QE_R werden durch ein Einbettungs-Modell auf Basis künstlicher Intelligenz, welches durch einen Einbettungs-Server EM_S bereitgestellt wird, abgebildet, beispielsweise ein Encoder, welcher mehr Eingangs-Knoten als Ausgangs-Knoten aufweist.

Anfragen an das Einbettungs-Modell werden durch entsprechende Antworten QE_R beantwortet.

Ein großes Sprachmodell, engl. "large language model", LLM wird verwendet, um den verfügbaren Kontext und die Benutzerabfrage zu interpretieren und eine optimierte hybride Suchabfrage NCD1 für den nächsten Abrufschritt zu erstellen.

Das LLM wird durch einen LLM-Server LLM_S bereitgestellt und liefert auf Anfragen, beispielsweise in Form von Eingabeaufforderungen LLM_RQ an das LLM entsprechende Antworten LLM_R.

Das LLM wird vorab mithilfe von entsprechenden Eingabeaufforderungen für Kontext PC, engl. "prompt context", vorbereitet.

Als nächstes erfolgt eine Zuordnung von Markierungen TM, engl. "tags mapping".

Die hybride Suchanfrage wird verwendet, um eine Teilmenge der verfügbaren OT-Markierungen T aus der Datenbank VDB so abzurufen, dass sie sowohl semantisch, beispielsweise durch eine Vektorähnlichkeit, als auch lexikalisch, beispielsweise durch eine Ähnlichkeit basierend auf Teilstring-Übereinstimmungen, die relevanten Regeln und Daten respektieren, die im Kontext verfügbar sind.

In diesem Fall könnte die Ähnlichkeit als gewichtete Summe aus Cosinus-Ähnlichkeit zwischen Einbettungen und lexikalischer Ähnlichkeit zwischen Texten, wie beispielsweise basierend auf dem BM25-Algorithmus, berechnet werden.

Der Algorithmus BM25 oder Best Match 25, auch bekannt als Okapi BM25 ist ein Ranking-Algorithmus für den Informationsabruf und Suchmaschinen, der die Relevanz eines Dokuments für eine bestimmte Anfrage festlegt und Dokumente basierend auf ihren Relevanz-Scores reiht.

Die Daten NCD1 werden der Markierungs-Zuordnung TM in Form von Asset-Name, Attribut-Name und jeweilige Kontext-Dokumente bereitgestellt.

Ein Modul TC_R zum Empfang von Markierungen für den Kontext empfängt als Antwort QE_R auf eine entsprechende Abfrage QE2 die jeweilige Einbettung.

Dies erfolgt, indem eine zweite Abfrage Einbettung QE2, an die Vektordatenbank VDB durchgeführt wird, welche die Anzahl k an nächstliegenden Kontext-Dokumente als zweites Ergebnis NCC2 liefert, welche in Form von Asset-Name, Attribut-Name und jeweiligen Kontext-Dokumenten, sowie jeweiligen Markierungen vorliegen.

Die Optimierung im Schritt NCD2, beispielsweise durch das LLM, welches vom LLM-Server LLM_S über eine Antwort LLM_R bereitgestellt wird, erfordert sowohl die Hyperparameter-Optimierung der Hybridsuche als auch die Formatierung der lexikalischen und semantischen Teile der Abfrage, beispielsweise das Gewicht der gewichteten Summe.

Das LLM wird vorab mithilfe von entsprechenden Eingabeaufforderungen für Markierungen PT, engl. "prompt tags", vorbereitet.

Aus den Ergebnissen RES wird ein Gesamt-Ergebnis AR (engl. "aggregate results") aggregiert und einem Benutzer zur weiteren Verarbeitung bereitgestellt, wie dem Betrieb eines verbundenen technischen Geräts mit einer entsprechenden Steuervorrichtung.

Das statistische Modul für die Bewertung und Rangfolge kann dann ein weiteres LLM nutzen, um sowohl die vorgeschlagenen Übereinstimmungen als auch eine Konfidenzmetrik basierend auf dem Logits-Vektor der Antwort bereitzustellen.

Zum Beispiel kann eine Punktzahl berechnet werden, indem zuerst die semantische Ähnlichkeitsmetrik für einen Datenpunkt gelesen wird, wie sie vom Empfangs-Modul RCD von Kontext-Dokumenten im vorherigen Schritt berechnet wurde, wie beispielsweise die Cosinus-Ähnlichkeit, gewichtet mit lexikalischer Ähnlichkeit.

Die Ähnlichkeitsmetrik, die Datenpunkte und die relevanten Kontextdaten werden anschließend an das LLM gesendet und abgefragt, um eine Rangfolge der Datenpunkte vorherzusagen.

Die Logits, welche mit der LLM-Vorhersage verbunden sind, werden in Wahrscheinlichkeiten umgewandelt.

Logits sind numerische Werte zwischen minus Unendlich und plus Unendlich, welche intern vom LLM verwendet werden, um zu entscheiden, welche Token - Texteinheiten - am besten sind, die in die Antwort - die Vorhersage - d einbezogen werden sollten.

Höhere Logits in der Antwortvariablen deuten auf eine höhere Zuverlässigkeit hin und können daher als Wahrscheinlichkeit interpretiert werden, indem sie in Werte zwischen 0 und 1 umgewandelt werden

Der Nutzer kann aus den aggregierten Ergebnissen AR einen Ausgangs-Datensatz OUT, beispielsweise mit Steuerdaten zum Betrieb des technischen Geräts TD1, erzeugen, sowie zusätzlich, optional, ein Feedback IN2 in einem Speicher für neuen Kontext NC der Vektordatenbank VDB speichern, um für die nächste Abfrageausführung zusätzliche Kontextdaten zur Verfügung zu stellen.

In diesem Schritt können beispielsweise verfügbare Techniken wie das Lernen von wenigen Schüssen (engl. "few shot learning") verwendet werden, um die Retrieval- und statistischen Bewertungsschritte iterativ zu verbessern.

Um eine Überschreitung der Token-Grenzwerte eines bestimmten LLM zu vermeiden, können mehrere parallele Anforderungen verwendet werden, um jeden relevanten Teil des Kontexts und die entsprechende Liste von Datenpunkten zu verarbeiten.

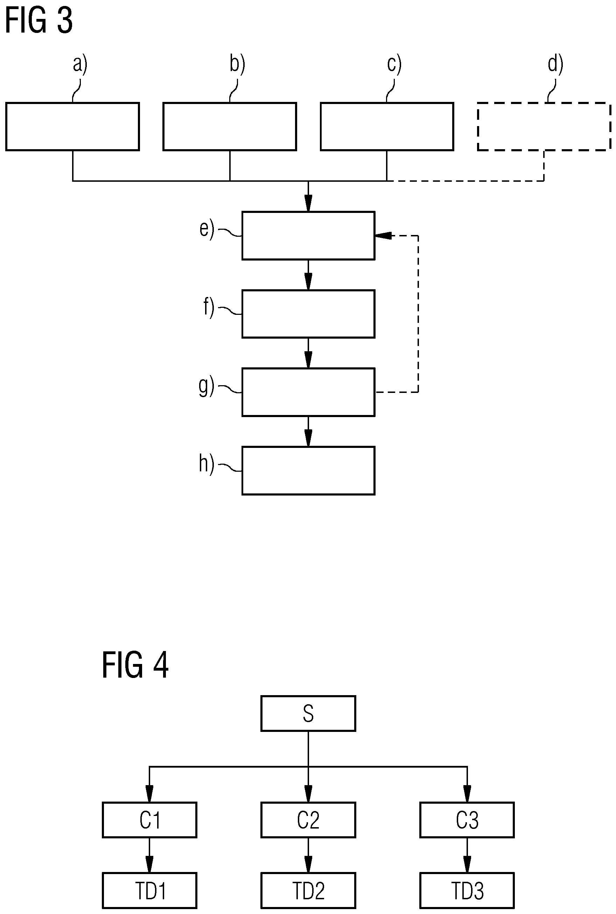

**Fig. 3** stellt ein Ausführungsbeispiel der Erfindung in Form eines Ablaufdiagramms als Verfahren zum Betrieb eines technischen Geräts TD1 durch eine verbundene Steuervorrichtung C1.

Der Betrieb des technischen Geräts TD1 kann mithilfe von Datenpunkten beschrieben werden, wobei unterschiedliche Betriebsparameter oder Betriebsmodi des technischen Geräts TD1 umfasst sein können.

Zumindest ein Verfahrens-Schritt ist in einen Computer implementiert.

Das System umfasst einen Server S und drei Klienten C1-C3 nach der nachfolgenden Figur.

Folgende Schritte werden ausgeführt:
a) Bereitstellen einer Steuerungsanfrage AA, AAN für das technische Gerät TD1, und Festlegen der Steuerungsanfrage als Eingabe,
b) Bereitstellen einer Menge von Betriebsdaten LDP für die Datenpunkte,
c) Bereitstellen einer Menge von Beschreibungen CD für die Datenpunkte,
d) Optionales Bereitstellen einer Menge von Gruppierungs-Markierungen T für die Datenpunkte,
e) Erzeugen von Steuerungs-Einbettungen E, NCD, NCD2 aus der Eingabe sowie einer Datenmenge, welche aus der Menge an Betriebsdaten LDP der Datenpunkte und/oder zu der Menge an Beschreibungen CD der Datenpunkte und/oder, optional, der Menge von Gruppierungs-Markierungen T für die Datenpunkte gebildet ist, mithilfe eines bereitgestellten Einbettungs-Modells in Form eines Encoders, und Berechnen einer jeweiligen Einbettungs-Ähnlichkeit einer jeweiligen Steuerungs-Einbettung E, NCD, NCD2 zur Eingabe anhand der semantischen Ähnlichkeit,
f) Berechnen von Steuerdaten NCD1, RES durch Anwenden der Steuerungs-Einbettungen E, NCD, NCD2 auf ein bereitgestelltes großes Sprachmodell, LLM,
g) Sortieren der jeweiligen Steuerdaten anhand der jeweiligen Einbettungs-Ähnlichkeit,
h) Ausführen der Steuerdaten aus den jeweiligen Steuerdaten RES mit der höchsten Einbettungs-Ähnlichkeit zum Betrieb eines technischen Geräts TD1 durch die Steuervorrichtung C1.

Die Schritte e) bis g) können wiederholt ausgeführt werden, und bei einem Durchlauf der Schritte e) bis g) wird zumindest aus einer Menge aus den in den Schritten b) bis d) bereitgestellten Mengen ausgewählt, welche die Datenmenge bildet.

Die Eingabe kann aus der im Schritt g) erhaltenen jeweiligen Steuerdaten mit der höchsten Einbettungs-Ähnlichkeit festgelegt sein.

Die Schritte e) bis g) können zunächst mit der Menge an Betriebsdaten LDP der Datenpunkte und/oder zu der Menge an Beschreibungen CD der Datenpunkte die Datenmenge gebildet sein.

In einer nachfolgenden Wiederholung können die Schritte e) bis g) mit der Menge von Gruppierungs-Markierungen T für die Datenpunkte die Datenmenge gebildet sein.

Die semantische Ähnlichkeit kann beispielsweise mithilfe der Cosinus-Ähnlichkeit zwischen zwei Steuerungs-Einbettungen bestimmt wird.

Die semantische Ähnlichkeit kann als gewichtete Summe von Cosinus-Ähnlichkeiten zwischen einer Steuerungs-Einbettung und einer lexikalischen Ähnlichkeit von Beschreibungs-Texten bestimmt werden.

Der im Schritt e) angewandte Encoder kann beispielsweise der Encoder eines bereitgestellten Auto-Encoders sein, welcher beispielsweise mithilfe von bereitgestellten Betriebsdaten oder entsprechende Aufzeichnungen, sowie Geräte-Spezifikationen, Benutzer-Handbücher, Schnittstellen-Definitionen trainiert werden kann.

Der Betrieb des technischen Geräts TD1 kann durch die Steuervorrichtung C1 mithilfe von Steuerinstruktionen erfolgen, welche aus den Steuerdaten abgeleitet werden.

Unter einem Geräte-Attribut AA kann beispielsweise ein individueller Datenwert, wie eine Temperatur, ein Druck, eine Stromaufnahme oder eine Geschwindigkeit verstanden werden.

Über entsprechende Namen für das Gerät TD1 und ein Attribut können die Parameter AAN eindeutig zugeordnet beziehungsweise gekennzeichnet werden.

**Fig. 4** zeigt ein Ausführungsbeispiel der Erfindung in Form eines Systems.

Das Klienten-Server-System umfasst einen Server S und drei Klienten C1-C3 mit jeweiligen Rechenvorrichtungen und jeweilig verbundenen technischen Geräten TD1-TD3.

Eine Rechenvorrichtung weist einen Prozessor und einen Speicher auf.

Eine jeweilige Steuervorrichtung ist dazu eingerichtet, aus den erzeugten Steuerdaten Steuerinstruktionen zum Steuern des jeweiligen technischen Geräts TD1-TD3 zu generieren und auszuführen.

Die Steuerinstruktionen können beispielsweise dazu dienen, Datenpunkte in Form Sensordaten auszulesen, oder Datenpunkte zu schreiben und festzulegen, um das technische Gerät TD1 in einen besonderen Betriebsmodus zu versetzen.

Das Klienten-Server-System ist dazu eingerichtet, das erfindungsgemäße Verfahren nach der vorhergehenden Figur auszuführen.

*Unabhängig vom grammatikalischen Geschlecht eines bestimmten Begriffes sind Personen mit männlicher, weiblicher oder anderer Geschlechteridentität mit umfasst.*

### Bezugszeichenliste

- AA: Geräte-Attribut (engl. "asset attribute")
- AAN: Geräte-Name (engl. "asset name, attribute name")
- AR: aggregiere Ergebnisse (engl. "aggregate results")
- CD: Kontext-Daten (engl. "context data")
- CS: Kontext-Suche (engl. "context search")
- C1-C3: Klient
- DAT: Daten, für den Benutzer relevant
- DB: Datenbank
- DP_DAT: Daten bezgl. Datenpunkt
- DP_DEF: Definitionen bzgl. Datenpunkt
- E: Einbettung (engl. "embedding")
- EM_S: Einbettungs-Modell-Server
- FB_DP: Rückkopplung (engl. "feedback")
- IN1, IN2: Eingangs-Daten
- LDP: Liste von Datenpunkten
- LLM: großes Sprach-Modell (engl. "large language model")
- LLM_R: Antwort von LLM
- LLM_RQ: Eingabeaufforderung an LLM
- LLM_S: LLM-Server
- NC: neuer Kontext (engl. "new context")
- NCC1, NCC2: nächstliegende Kontext-Dokumente (engl. "k nearest context documents")
- NCD, NCD1, NCD2: Namen und Kontext-Daten (engl. "names and context data")
- OUT: Ausgangs-Daten
- PC: Eingabeaufforderung für Kontext (engl. "prompt context")
- PT: Eingabeaufforderung für Markierungen (engl. "prompt tags")
- QE_R: Antwort auf Abfrage Einbettung (engl. "query embedding response")
- QE1, QE2: Abfrage Einbettung (engl. "query embedding")
- RCD: Empfangs-Modul zum Empfang von Kontext-Dokumenten (engl. "retrieval of context documents")
- RES: Ergebnis (engl. "result")
- S: Server
- SERE: Modell-Modul engl. "semantic embedding and retrieval engine"
- SESR: Bewertungs-Modul engl. "statistical engine for scoring and ranking"
- T: Markierung (engl. "tag")
- TC_R: Empfang von Markierungen für Kontext (engl. "retrieval of tags for context")
- TM: Markierungs-Zuodnung (engl. "tags mapping")
- UPD: engl "update"
- VDB: Vektordatenbank

## Patentansprüche

1. Computer-implementiertes Verfahren zum Betrieb eines technischen Geräts (TD1) durch eine verbundene Steuervorrichtung (C1), wobei dessen Betrieb mithilfe von Datenpunkten beschrieben werden kann, und folgende Schritte ausgeführt werden:
a) Bereitstellen einer Steuerungsanfrage (AA, AAN) für das technische Gerät (TD1), und Festlegen der Steuerungsanfrage als Eingabe,
b) Bereitstellen einer Menge von Betriebsdaten (LDP) für die Datenpunkte,
c) Bereitstellen einer Menge von Beschreibungen (CD) für die Datenpunkte,
d) Optionales Bereitstellen einer Menge von Gruppierungs-Markierungen (T) für die Datenpunkte,
e) Erzeugen von Steuerungs-Einbettungen (E, NCD, NCD2) aus der Eingabe sowie einer Datenmenge, welche aus der Menge an Betriebsdaten (LDP) der Datenpunkte und/oder zu der Menge an Beschreibungen (CD) der Datenpunkte und/oder, optional, der Menge von Gruppierungs-Markierungen (T) für die Datenpunkte gebildet ist, mithilfe eines bereitgestellten Einbettungs-Modells in Form eines Encoders, und Berechnen einer jeweiligen Einbettungs-Ähnlichkeit einer jeweiligen Steuerungs-Einbettung (E, NCD, NCD2) zur Eingabe anhand der semantischen Ähnlichkeit,
f) Berechnen von Steuerdaten (NCD1, RES) durch Anwenden der Steuerungs-Einbettungen (E, NCD, NCD2) auf ein bereitgestelltes großes Sprachmodell, LLM,
g) Sortieren der jeweiligen Steuerdaten anhand der jeweiligen Einbettungs-Ähnlichkeit,
h) Ausführen der Steuerdaten aus den jeweiligen Steuerdaten (RES) mit der höchsten Einbettungs-Ähnlichkeit zum Betrieb eines technischen Geräts (TD1) durch die Steuervorrichtung (C1).

2. Verfahren nach dem vorhergehenden Anspruch, wobei die Schritte e) bis g) wiederholt ausgeführt werden, und bei einem Durchlauf der Schritte e) bis g) zumindest einer Menge aus den in den Schritten b) bis d) bereitgestellten Mengen ausgewählt sind, welche die Datenmenge bilden, und die Eingabe aus der im Schritt g) erhaltenen jeweiligen Steuerdaten mit der höchsten Einbettungs-Ähnlichkeit festgelegt ist.

3. Verfahren nach dem vorhergehenden Anspruch, wobei die Schritte e) bis g) zunächst mit der Menge an Betriebsdaten (LDP) der Datenpunkte und/oder zu der Menge an Beschreibungen (CD) der Datenpunkte die Datenmenge bilden, und in einer nachfolgenden Wiederholung die Schritte e) bis g) mit der Menge von Gruppierungs-Markierungen (T) für die Datenpunkte die Datenmenge bildet.

4. Verfahren nach einem der vorhergehenden Ansprüche, wobei die semantische Ähnlichkeit mithilfe der Cosinus-Ähnlichkeit zwischen zwei Steuerungs-Einbettungen bestimmt wird.

5. Verfahren nach dem vorhergehenden Anspruch, wobei die semantische Ähnlichkeit als gewichtete Summe von Cosinus-Ähnlichkeiten zwischen einer Steuerungs-Einbettung und einer lexikalischen Ähnlichkeit von Beschreibungs-Texten bestimmt wird.

6. Verfahren nach einem der vorhergehenden Ansprüche, wobei der im Schritt e) angewandte Encoder der Encoder eines bereitgestellten Auto-Encoders ist.

7. Verfahren nach einem der vorhergehenden Ansprüche, wobei der Betrieb des technischen Geräts (TD1) durch die Steuervorrichtung (C1) mithilfe von Steuerinstruktionen erfolgt, welche aus den Steuerdaten abgeleitet werden.

8. System zum Betrieb eines technischen Geräts (TD1) durch eine umfasste, verbundene Steuervorrichtung (C1), wobei das Verfahren nach einem der vorhergehenden Ansprüche ausgeführt wird.

9. System nach dem vorhergehenden Anspruch, wobei das System ein Klienten-Server-System mit einem Server (S) und zumindest einem verbundenen Klienten (C1-C3) ist, welcher jeweils mit einem technischen Gerät (TD1-TD3) verbunden ist, und die Steuervorrichtung von einem jeweiligen Klienten (C1-C3) umfasst ist.

10. Computer-Programm-Produkt, umfassend Befehle, die bei der Ausführung des Programms durch das Klienten-Server-System nach einem der vorhergehenden System-Ansprüche dieses veranlassen, das Verfahren/die Schritte des Verfahrens nach einem der vorhergehenden Verfahrens-Ansprüche auszuführen.
